# EUROPEAN PATENT APPLICATION

(11) **EP 3 567 718 A2**
(43) Date of publication of application: **13.11.2019**
(21) Application number: 19173669.3
(22) Date of filing: 09.05.2019
(51) Int. Cl.: H02P 6/17

(54) **CONTROL CIRCUITRY AND METHOD APPLIED TO PUMPING DEVICE, PUMPING DEVICE AND AQUARIUM EQUIPMENT**

(30) Priority: 10.05.2018 CN 201820694763 U; 10.05.2018 CN 201810443186; 10.05.2018 CN 201820707031 U
(71) Applicant: Guangdong Boyu Group Co., Ltd, Raoping County Chaozhou Guangdong 515700 (CN)
(72) Inventor: YU, Youkai, Guangdong Province, 515700 (CN); YU, Bingyan, Guangdong, 515700 (CN); YU, Jianqin, Guangdong, 515700 (CN)
(74) Representative: HGF Europe LLP

(57) **Abstract**

Disclosed are a control circuitry and control method applied to a pumping device, the pumping device, and aquarium equipment. The pumping device is used for pumping water and air. The control circuitry includes: a detection and feedback circuit that obtains a working state of the pumping device and transmits the working state to a signal processing circuit; the signal processing circuit that adjusts in real time a drive signal to be sent to a power drive circuit according to the working state information; and the power drive circuit that drives a motor in the pumping device to operate according to the drive signal. The motor is controlled to operate at a first rotational speed in a water pumping state, and to operate at a second rotational speed in an air pumping state, where the first rotational speed is lower than the second rotational speed.

## Description

### TECHNICAL FIELD

The present invention relates to techniques for driving and controlling a pumping device and, in particular, to a control circuitry and method applied to a pumping device, the pumping device and aquarium equipment.

### BACKGROUND

People are having increasingly more space for leisure activities. Keeping pets has become a way of entertainment as well as a way of releasing stress. One example is to keep a pet or fish in an aquarium or a garden pond. Accordingly, the aquarium and garden pond has become an indispensable piece of furniture or decoration in a home or a working environment.

An existing aquarium or garden pond is usually provided with a water treatment filter, which is connected to water in the aquarium or garden pond through inlet and outlet tubes. Water in the aquarium or garden pond is drawn into the filter by a water pump disposed in the filter, processed and filtered by the filter, and then returned to the aquarium or garden pond.

An existing centrifugal water pump cannot draw and convey air while an existing centrifugal air pump cannot draw and convey water. Therefore, a centrifugal pump cannot be used to both drain air from the filter and pump water. In existing products, a manual exhaust device or a dedicated air pump is usually disposed in the filter, resulting in a complicated structure and making the production and use troublesome. Meanwhile, in the related art, there lacks a control circuitry, which can be applied to a pumping device that can pump both water and air, and which can automatically adjust a drive signal of the circuitry according to a working state of the pumping device when it is pumping water or air, thereby adjusting the rotational speed of the pumping device.

### SUMMARY

The present invention provides a control circuitry and a control method applied to a pumping device, the pumping device, and aquarium equipment, whereby the pumping device can be controlled to achieve a dual function of water pumping and air pumping, which are convenient to use and operate, thereby reducing the troubles and the difficulty in operation.

In a first aspect, an embodiment of the present invention provides a control circuitry applied to a pumping device configured for pumping water and air. The control circuitry includes a detection and feedback circuit, a signal processing circuit, and a power drive circuit.

The detection and feedback circuit is coupled to the signal processing circuit and configured to obtain working state information of the pumping device and feed the working state information back to the signal processing circuit.

The signal processing circuit is coupled to the power drive circuit and configured to adjust in real time a drive signal to be sent to the power drive circuit according to the working state information.

The power drive circuit is coupled to the detection and feedback circuit and configured to drive a motor in the pumping device to operate according to the drive signal.

The control circuitry is configured to control the motor to operate at a first rotational speed in response to the pumping device being under a water pumping state, and control the motor to operate at a second rotational speed in response to the pumping device being under an air pumping state, where the first rotational speed is less than the second rotational speed.

In a second aspect, an embodiment of the present invention provides a control method applied to a pumping device. The method includes the following operations.

Current working state information of the pumping device is obtained.

A drive signal to be sent to the pumping device is adjusted in real time according to the working state information of the pumping device to control a working state of the pumping device to adapt to a current water or air pumping state. In the water pumping state, a motor in the pumping device is configured to operate at a first rotational speed, and in the air pumping state, the motor is configured to operate at a second rotational speed, where the first rotational speed is less than the second rotational speed.

In a third aspect, an embodiment of the present invention provides a pumping device that includes a pump housing. The pump housing includes a first pump housing and a second pump housing connected to each other. The first pump housing is provided with a water inlet. The second pump housing is provided with a water outlet. A partition plate is disposed between the first pump housing and the second pump housing. A pump room is formed between the first pump housing and the partition plate and is configured for accommodating an impeller. The water inlet communicates with the pump room. A receiving cavity is formed between the second pump housing and the partition plate and is configured for accommodating a motor. The motor is spaced apart from the second pump housing. A rotating shaft of the motor passes through the partition plate to be connected to the impeller. An outlet channel in communication with the water outlet passage is formed between a housing of the motor and the second pump housing. The partition plate is provided with multiple water outlet holes corresponding to the water outlet passage.

In a fourth aspect, an embodiment of the present invention provides an aquarium equipment which is provided with the pumping device according to the above embodiments.

Embodiments of the present invention provide the control circuitry and control method applied to the pumping device, the pumping device, and the aquarium equipment. The pumping device is used for pumping both water and air. The control circuitry includes a detection and feedback circuit, a signal processing circuit, and a power drive circuit. The control method includes: obtaining current working state information of the pumping device; and adjusting in real time a drive signal to be sent to the pumping device according to the working state information of the pumping device to control a working state of the pumping device to adapt to the current water or air pumping state. Through the pumping device and the control circuitry, the pumping device has a dual function of water pumping and air pumping. Furthermore, when pumping air, the pumping device can operate at a relatively high rotational speed when pumping air thus achieving an sufficient air pumping capability. When pumping water, the motor would operate at a relatively low rotational speed to regulate power consumption and prevent overloads. Therefore, the pumping device can pump both water and air and switch between the water pumping state and the air pumping state by simple and quick operations, thereby effectively solving the problem of complicated air discharge, water discharge, and water change operations of an aquarium equipment.

### BRIEF DESCRIPTION OF DRAWINGS

FIG. 1 is a schematic diagram illustrating a control circuitry applied to a pumping device according to Embodiment 1 of the present invention;
FIG. 2 is a circuit diagram of a detection and feedback circuit according to Embodiment 1 of the present invention;
FIG. 3 is a circuit diagram of a power drive circuit according to Embodiment 1 of the present invention;
FIG. 4 is another schematic diagram of the control circuitry applied to the pumping device according to Embodiment 1 of the present invention;
FIG. 5 is a flowchart illustrating a control method applied to a pumping device according to Embodiment 2 of the present invention;
FIG. 6 is a sectional view of a pumping device according to Embodiment 3 of the present invention; and
FIG. 7 is an exploded diagram illustrating the pumping device according to Embodiment 3 of the present invention.

### DETAILED DESCRIPTION

Hereinafter the present invention will be further described in detail in conjunction with the drawings and embodiments. It may be understood that the specific embodiments set forth below are intended to illustrate and not to limit the present invention. Additionally, it is to be noted that, for ease of description, only part, not all, of the structures related to the present invention are illustrated in the drawings.

### Embodiment 1

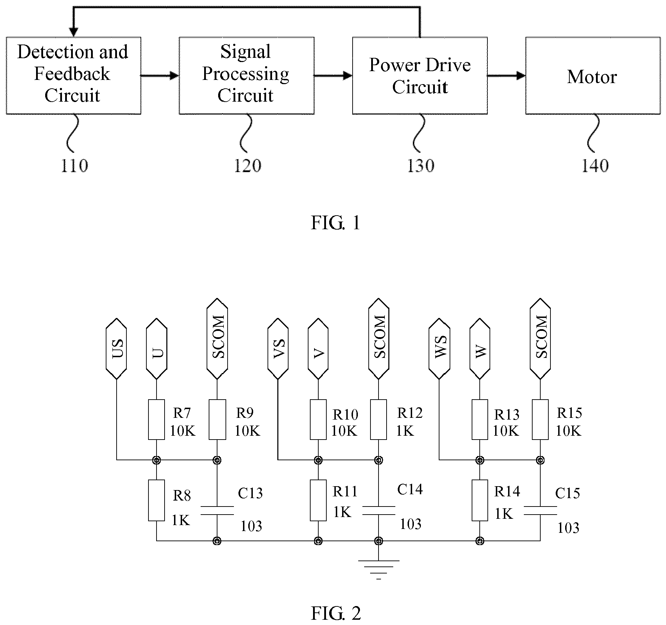

FIG. 1 is a schematic diagram illustrating a control circuitry applied to a pumping device according to Embodiment 1 of the present invention. As illustrated in FIG. 1, the control circuitry is applied to a pumping device configured for pumping water and air and includes a detection and feedback circuit 110, a signal processing circuit 120, and a power drive circuit 130.

The detection and feedback circuit 110 is coupled to the signal processing circuit 120 and configured to obtain working state information of the pumping device and feed the working state information back to the signal processing circuit 120.

The signal processing circuit 120 is coupled to the power drive circuit 130 and configured to adjust in real time a drive signal to be sent to the power drive circuit according to the working state information.

The power drive circuit 130 is coupled to the detection and feedback circuit 110 and configured to drive a motor 140 in the pumping device to operate according to the drive signal.

The control circuitry is configured to control the motor to operate at a first rotational speed in response to the pumping device being under a water pumping state, and control the motor 140 to operate at a second rotational speed in response to the pumping device being under an air pumping state, where the first rotational speed is less than the second rotational speed.

FIG. 2 is a circuit diagram of a detection and feedback circuit according to Embodiment 1 of the present invention. As illustrated in FIG. 2, the detection and feedback circuit 110 includes a feedback signal detection circuit. The feedback signal detection circuit includes a U-phase feedback signal detection circuit, a V-phase feedback signal detection circuit, and a W-phase feedback signal detection circuit.

The feedback signal detection circuit includes a resistor R7, a resistor R8, a resistor R9, a resistor R10, a resistor R11, a resistor R12, a resistor R13, a resistor R14, a resistor R15, a capacitor C13, a capacitor C14 and a capacitor C15. A first terminal of the resistor R8, a first terminal of the capacitor C13, a first terminal of the resistor R11, a first terminal of the capacitor C14, a first terminal of the resistor R14, and a first terminal of the capacitor C15 are coupled to a power ground. A second terminal of the resistor R8 is coupled to a pin 4 of a single-chip microcomputer U3. A first terminal of the resistor R7, a second terminal of the capacitor C13, a first terminal of the resistor R9, and a second terminal of the resistor R7 are coupled to a U-phase terminal of a motor M1. A second terminal of the resistor R11 is coupled to a pin 6 of the single-chip microcomputer U3. A first terminal of the resistor R10, a second terminal of the capacitor C14, a first terminal of the resistor R12, and a second terminal of the resistor R10 are coupled to a V-phase terminal of the motor M1. A second terminal of the resistor R14 is coupled to a pin 5 of the single-chip microcomputer U3, to a first terminal of the resistor R13, to a second terminal of the capacitor C15, and to a first terminal of the resistor R15. A second terminal of the resistor R13 is coupled to a W-phase terminal of the motor M1. The resistor R9, the resistor R12, and the resistor R15 are coupled to a pin 7 of the single-chip microcomputer U3.

Specifically, the detection and feedback circuit 110 is configured to detect a phase of an output signal and a magnitude of an output current of the motor, so as to determine a current magnetic pole position of a permanent magnet rotor of the motor, conduction conditions of a U-phase winding, a V-phase winding, and a W-phase winding, and a magnitude of a present working current of the motor, a time interval of a U-phase, V-phase, or W-phase feedback signal, and the like, and configured to further feed the information back to the signal processing circuit 120.

The working state information of the pumping device obtained by the detection and feedback circuit 110 includes a current rotational speed, a current working current, a current working power, and the like of the motor 140. The detection and feedback circuit 110 may also be connected to a pressure gauge in the pumping device to detect a pressure value of a tube in the pumping device. The detection and feedback circuit 110 feeds the working state information back to the signal processing circuit 120 to enable the signal processing circuit to adjust a magnitude of the drive signal sent to the pumping device according to the current rotational speed, working current, and working power of the motor 140 or the pressure value. For example, when the pumping device is in the air pumping state, air resistance is small and the pressure value in the pumping device is low. It may be determined according to the pressure value that currently the motor is in the air pumping state, and so the drive signal is adjusted and the rotational speed of the motor 140 is increased to improve the working efficiency.

The rotational speed of the motor in the pumping device may lie in the range of 500 to 30000 rpm (rounds per second). Exemplarily, the first rotational speed may be 1000 to 4000 rpm, and the second rotational speed may be 8000 to 20000 rpm. When the pumping device is in different states as pumping water or air, an impeller of the pumping device may bear different loads, and a relevant parameter of the pumping device would also change. The control circuitry may automatically adjust an operating parameter and a working mode according to a change of the relevant parameter. The relevant parameter may be the working current or the like, the operating parameter may be the rotational speed or the like, and the working mode may be water pumping or air pumping. For example, when the pumping device is in the water pumping state, Because of a relatively large water resistance, the impeller of the pumping device would suffer a relatively large load and the working current would increase, and in this case the control circuitry may control the motor 140 to decrease the rotational speed so as to decrease the working current. When the pumping device switches to the air pumping state, due to a relatively small air density and a relatively small load on the impeller of the pumping device, the working current is relatively small, and in this case the control circuitry may control the motor 140 to increase tis rotational speed to adapt to the air pumping state, so as to improve the air pumping capability and the working efficiency.

The signal processing circuit 120 mainly includes a single-chip microcomputer modeled STC15W408AS and a peripheral circuitry composed of resistors and capacitors related to the single-chip microcomputer. In this embodiment, the signal processing circuit 120 includes the STC15W408AS single-chip microcomputer U3, a capacitor C9 and a capacitor C10. A pin 8 of the single-chip microcomputer U3 is coupled to a first terminal of the capacitor C9, a first terminal of the capacitor C10, and a power supply Vcc. A pin 10 of the single-chip microcomputer U3, a second terminal of the capacitor C9, and a second terminal of the capacitor C10 are coupled to the power ground. Of course, implementations of the signal processing circuit 120 are not limited to the circuitry mentioned in this embodiment, and other circuitries which can implement the functions required in this embodiment are all subjects claimed in the present invention. The single-chip microcomputer U3 may receive feedback information from the detection and feedback circuit 110 and perform signal processing on an operating command and the feedback information received by the single-chip microcomputer U3 to generate a corresponding drive signal to be transmitted to the power drive circuit 130, so as to control various functional modules of the control circuitry of the pumping device to work methodically.

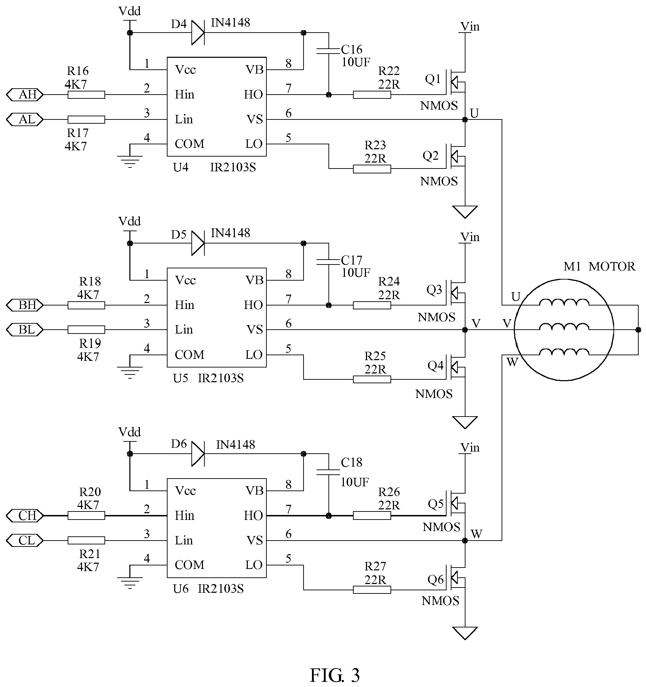

FIG. 3 is a circuit diagram of a power drive circuit according to Embodiment 1 of the present invention. As illustrated in FIG. 3, the power drive circuit 130 includes a U-phase drive circuit, a V-phase drive circuit, and a W-phase drive circuit. The motor of the pumping device includes the U-phase winding, the V-phase winding, and the W-phase winding. The U-phase drive circuit is configured to drive the U-phase winding to operate, the V-phase drive circuit is configured to drive the V-phase winding to operate, and the W-phase drive circuit is configured to drive the W-phase winding to operate. The signal processing circuit 120 includes the single-chip microcomputer U3 modeled STC15W408AS.

The U-phase drive circuit includes a half-bridge driver U4 modeled IR2103S, a diode D4 whose model is IN4148, an NMOS transistor Q1, an NMOS transistor Q2, a resistor R16, a resistor R17, a resistor R22, a resistor R23 and a capacitor C16. A pin 2 of the half-bridge driver U4 is coupled to a first terminal of the resistor R16. A second terminal of the resistor R16 is coupled to a pin 20 of the single-chip microcomputer U3. A pin 3 of the half-bridge driver U4 is coupled to a first terminal of the resistor R17. A second terminal of the resistor R17 is coupled to a pin 19 of the single-chip microcomputer U3. A pin 4 of the half-bridge driver U4 is coupled to the power ground. A pin 1 of the half-bridge driver U4 is coupled to a power supply Vdd. A pin 5 of the half-bridge driver U4 is coupled to a first terminal of the resistor R23. A second terminal of the resistor R23 is coupled to a Gate of the NMOS transistor Q2. A pin 7 of the half-bridge driver U4 is coupled to a first terminal of the resistor R22 and to a first terminal of the capacitor C16. A pin 8 of the half-bridge driver U4 is coupled to a second terminal of the capacitor C16 and to a first terminal of the diode D4. A second terminal of the diode D4 is coupled to the power supply Vdd. The resistor R22 is coupled to a Gate of the NMOS transistor Q1. A pin 6 of the half-bridge driver U4 is coupled to a Source of the NMOS transistor Q1, to a Drain of the NMOS transistor Q2 and to a U-phase terminal of the motor M1. A Drain of the NMOS transistor Q1 is coupled to an input power supply Vin. A Source of the NMOS transistor Q2 is coupled to a virtual ground.

The V-phase drive circuit includes a half-bridge driver U5 modeled IR2103S, a diode D5 modeled IN4148, an NMOS transistor Q3, an NMOS transistor Q4, a resistor R18, a resistor R19, a resistor R24, a resistor R25 and a capacitor C17. A pin 2 of the half-bridge driver U5 is coupled to a first terminal of the resistor R18. A second terminal of the resistor R18 is coupled to a pin 18 of the single-chip microcomputer U3. A pin 3 of the half-bridge driver U5 is coupled to a first terminal of the resistor R19. A second terminal of the resistor R19 is coupled to a pin 17 of the single-chip microcomputer U3. A pin 4 of the half-bridge driver U5 is coupled to the power ground. A pin 1 of the half-bridge driver U5 is coupled to the power supply Vdd. A pin 5 of the half-bridge driver U5 is coupled to a first terminal of the resistor R25. A second terminal of the resistor R25 is coupled to a Gate of the NMOS transistor Q4. A pin 7 of the half-bridge driver U5 is coupled to a first terminal of the resistor R24 and to a first terminal of the capacitor C17. A pin 8 of the half-bridge driver U5 is coupled to a second terminal of the capacitor C17 and to a first terminal of the diode D5. A second terminal of the diode D5 is connected to the power supply Vdd. The resistor R24 is coupled to a Gate of the NMOS transistor Q3. A pin 6 of the half-bridge driver U5 is coupled to a Source of the NMOS transistor Q3, to a Drain of the NMOS transistor Q4 and to a V-phase terminal of the motor M1. A Drain of the NMOS transistor Q3 is coupled to the input power supply Vin. A Source of the NMOS transistor Q4 is coupled to the virtual ground.

The W-phase drive circuit includes a half-bridge driver U6 modeled IR2103S, a diode D6 modeled IN4148, an NMOS transistor Q5, an NMOS transistor Q6, a resistor R20, a resistor R21, a resistor R26, a resistor R27 and a capacitor C18. A pin 2 of the half-bridge driver U6 is coupled to a first terminal of the resistor R20. A second terminal of the resistor R20 is coupled to a pin 16 of the single-chip microcomputer U3. A pin 3 of the half-bridge driver U6 is coupled to a first terminal of the resistor R21. A second terminal of the resistor R21 is coupled to a pin 15 of the single-chip microcomputer U3. A pin 4 of the half-bridge driver U6 is coupled to the power ground. A pin 1 of the half-bridge driver U6 is coupled to the power supply Vdd. A pin 5 of the half-bridge driver U6 is coupled to a first terminal of the resistor R27. Asecond terminal of the resistor R27 is coupled to a Gate of the NMOS transistor Q6. A pin 7 of the half-bridge driver U6 is coupled to a first terminal of the resistor R26 and to a first terminal of the capacitor C18. A pin 8 of the half-bridge driver U6 is coupled to a second terminal of the capacitor C18 and to a first terminal of the diode D6. A second terminal of the diode D6 is coupled to the power supply Vdd. The resistor R26 is coupled to a Gate of the NMOS transistor Q5. A pin 6 of the half-bridge driver U6 is coupled to a Source of the NMOS transistor Q5, to a Drain of the NMOS transistor Q6 and to the W-phase terminal of the motor M1. A Drain of the NMOS transistor Q5 is coupled to the input power supply Vin. A Source of the NMOS transistor Q6 is coupled to the virtual ground.

The motor M1 is a three-phase synchronous motor with a permanent magnet rotor. When a three-phase current is applied to a three-phase stator winding of the motor M1, a rotational magnetic field is generated, and the permanent magnet rotor rotates synchronously with the rotational magnetic field. Three phases of the stator winding are respectively a U phase, a V phase, and a W phase, corresponding to the U-phase winding, the-V phase winding, and the W-phase winding. A phase difference between every two adjacent windings is 120°. Alternatively, a phase difference between phases is 120° for six poles and three phases, and each phase includes two pole windings symmetrically arranged. In a star connection, tail ends or head ends of the three windings are connected, and the other three ends, as drive input ends, are coupled to external circuits. For example, U2, V2, and W2 are coupled to each other, U1 is coupled to the U-phase drive circuit, VI is coupled to the V-phase drive circuit, and W1 is coupled to the W-phase drive circuit.

The power drive circuit 130 is configured to drive the motor 140 in the pumping device to respond differently according to a magnitude, a direction, a type and a frequency of the drive signal sent by the signal processing circuit, so as to adjust a rotating direction, a rotational speed, a working current and the like of the motor 140 to adapt to the water pumping state or the air pumping state of the pumping device. Meanwhile, the power drive circuit 130 is coupled to the detection and feedback circuit 110 so that the detection and feedback circuit 110 acquires in time the working state information of the motor 140 and feeds the working state information back to the signal processing circuit 120 for analysis and processing.

Embodiments according to the present invention provide the control circuitry applied to the pumping device configured for pumping water and air. The control circuitry includes the detection and feedback circuit, the signal processing circuit, and the power drive circuit. The detection and feedback circuit is configured to obtain the working state information of the pumping device and feed the working state information back to the signal processing circuit. The signal processing circuit is configured to adjust in real time the drive signal to be sent to the power drive circuit according to the working state information. The power drive circuit is configured to drive the motor in the pumping device to operate according to the drive signal. The control circuitry is configured to control the motor to operate at the first rotational speed in response to the pumping device being in the water pumping state, and control the motor to operate at the second rotational speed in response to the pumping device being in the air pumping state, where the first rotational speed is lower than the second rotational speed. With the pumping device and the control circuitry, the pumping device is enabled with the dual function of water pumping and air pumping. Furthermore, when pumping air, the pumping device can operate at a high rotational speed to obtain a sufficient air pumping capability, and when pumping water, the pumping device can operate at a low rotational speed to control power consumption and prevent overload. Therefore, the pumping device can pump both water and air and switch between the water pumping state and the air pumping state through simple and quick operations, thereby effectively solving the problem of complicated air discharge, water discharge and water change operations of aquarium equipment.

Based on the preceding embodiment, the control circuitry further includes an operating and display circuit 150 coupled to the signal processing circuit 120 and configured to obtain an operating instruction, output the operating instruction to the signal processing circuit 120, and display a current working state of the pumping device.

The operating and display circuit 150 includes a function button, a digital button, an LED display lamp, a digital tube, a liquid crystal display and the like, and is configured to control and display the working state of the pumping device. A switch button of the operating and display circuit is configured to turn on or off a power supply of the pumping device. A state function button is configured to switch between the water pumping state and the air pumping state. One or more LED lamps may be disposed to display an abnormal state, a water pumping state, or an air pumping state in which the motor currently operates, or to display a current rotational speed of the motor. For example, when the LED lamp is red, it indicates that the pumping device is currently in an abnormal state; when the LED lamp is yellow, it indicates that the pumping device is in the water pumping state; and when the LED lamp is green, it indicates that the pumping device is in the air pumping state. Similarly, different colors of the LED lamp may also indicate a relative magnitude of the current rotational speed of the motor. For example, when the LED lamp is yellow, it indicates that the motor is operating at a low rotational speed; and when the LED lamp is green, it indicates that the motor is operating at a high rotational speed. The digital tube may directly display a value of the current rotational speed. Of course, the pumping device may also be provided with the liquid crystal display. A user may directly operate on a touch liquid crystal display and view the current working state of the pumping device. For example, the current rotational speed of the motor is changed through the operating and display circuit and a target rotational speed is input by means of the digital button or the liquid crystal display; the operating and display circuit receives the target rotational speed, converts it into a corresponding operating instruction, and outputs the operating instruction to the signal processing circuit.

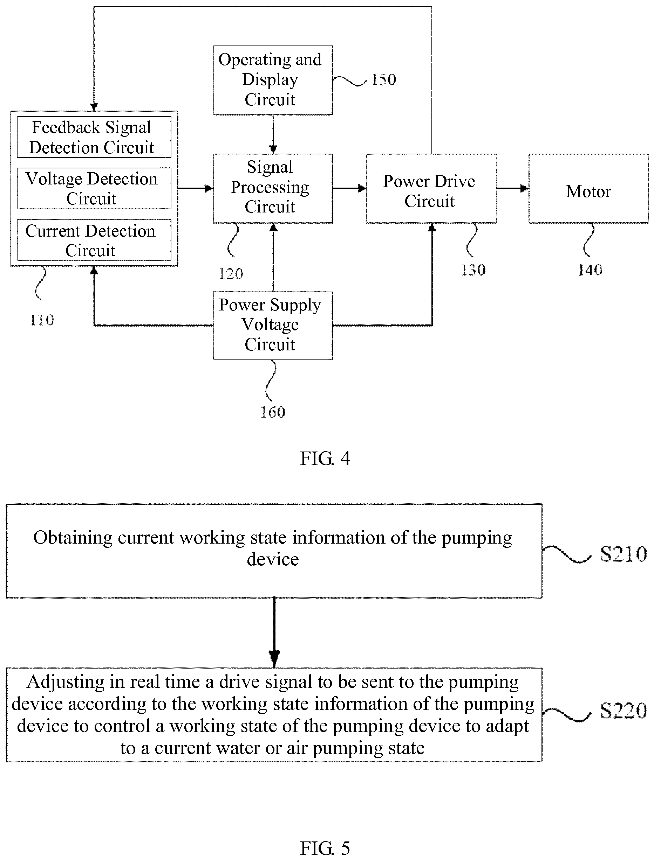

FIG. 4 is another schematic diagram illustrating the control circuitry applied to the pumping device according to Embodiment 1 of the present invention. As illustrated in FIG. 4, based on the preceding embodiment, the detection and feedback circuit 110 in the control circuitry further includes a voltage detection circuit configured to determine whether a voltage in the control circuitry is an undervoltage or overvoltage.

For all motors, a normal operation of the motor needs a rated voltage. However, in practice, the motor cannot be guaranteed to operate at the rated voltage, but the motor needs to operate within a range around the rated voltage, which is generally required to be ±15%. If a practical working voltage is lower than the rated voltage by 15%, the control circuitry would be in an undervoltage state, otherwise if the practical working voltage is higher than the rated voltage by 15%, the control circuitry would be in an overvoltage state. When detecting that the practical working voltage in the control circuitry decreases to a certain value and the control circuitry is in the undervoltage state, the motor may automatically cut off from the power supply and stop rotating, thereby protecting the motor. However, when detecting that the practical working voltage in the control circuitry exceeds a preset maximum value, then the power supply would be turned off or the voltage of the motor may be decreased to prevent the motor from being damaged.

In this embodiment, the voltage detection circuit includes a resistor R3, a resistor R4, and a capacitor C11. A first terminal of the resistor R4 is coupled to a first terminal of the resistor R3, to a first terminal of the capacitor C11, and to a pin 3 of the single-chip microcomputer U3. A second terminal of the resistor R3 is coupled to the power supply Vin. A second terminal of the resistor R4 and a second terminal of the capacitor C11 are coupled to the power ground. Of course, implementations of the voltage detection circuit will not be limited to the circuit mentioned in this embodiment, and other circuits which can implement the function required in this embodiment are all subjects claimed in the present invention.

Based on the preceding embodiment, with continued reference to FIG. 4, as illustrated in FIG. 4, the detection and feedback circuit 110 further includes a current detection circuit configured to detect a magnitude of a instant working current of the motor and determine a working state of the motor.

In this embodiment, the current detection circuit includes a resistor R5, a resistor R6, and a capacitor C12. A first terminal of the resistor R5 and a first terminal of the resistor R6 are coupled to the virtual ground. A second terminal of the resistor R5 and a first terminal of the capacitor C12 are coupled to the power ground. A second terminal of the capacitor C12 and a second terminal of the resistor R6 are coupled to a pin 2 of the single-chip microcomputer U3. The resistor R5 is configured to sample a current, and the circuit consisting of the resistor R6 and the capacitor C12 is configured to filter a current signal. Of course, implementations of the current detection circuit will not be limited to the circuit mentioned in this embodiment, and other circuits which can implement the function required in this embodiment are all subjects claimed in the present invention.

Specifically, at the set rotational speed, when the current detection circuit detects that the instant working current of the motor 140 in the pumping device is relatively small, it indicates that the motor 140 is in the air pumping state; when the current detection circuit detects that the instant working current of the motor 140 in the pumping device is relatively large, it indicates that the motor 140 is in the water pumping state. Of course, when the motor 140 is in an abnormal state such as being blocked, the working current may also change. In this case, relevant parameters such as the rotational speed of the motor 140 should be taken into consideration to determine the working state of the motor 140.

Based on the preceding embodiment, the detection and feedback circuit 110 is further configured to detect the U-phase, V-phase, or W-phase feedback signal and its time interval to determine the working state of the motor.

The working state may be the rotational speed, the working current, and the working state such as the water pumping state or the air pumping state of the motor. By detecting the time interval of the U-phase, V-phase, or W-phase feedback signal, the current rotational speed of the motor 140 may be calculated. The smaller the time interval, the higher the rotational speed of the motor 140; the larger the time interval, the lower the rotational speed of the motor 140. Based on the magnitude of the rotational speed, it can be determined as to whether the motor is currently in the water pumping state or the air pumping state.

Based on the preceding embodiment, the signal processing circuit 120 is further configured to adjust a width of a pulse width modulation signal that drives the motor to operate according to the time interval of the U-phase, V-phase, or W-phase feedback signal to adjust the rotational speed of the motor.

The width of the pulse width modulation (PWM) signal determines the magnitude of the rotational speed of the motor 140, and the width of the PWM signal is adjusted to adjust the rotational speed of the motor 140. The larger the width of the PWM signal, the higher the rotational speed of the motor 140; and the smaller the width of the PWM signal, the lower the rotational speed of the motor 140.

Exemplarily, when the time interval of the U-phase, V-phase, or W-phase feedback signal is relatively small, the motor 140 operates at the high rotational speed. In this case, if the motor 140 needs to switch to the low rotational speed, the width of the PWM signal may be decreased to decrease the rotational speed. When the time interval of the U-phase, V-phase, or W-phase feedback signal is relatively large, the motor 140 operates at the low rotational speed. In this case, if the motor 140 needs to switch to the high rotational speed, the width of the PWM signal may be increased to increase the rotational speed.

Based on the preceding embodiment, with continued reference to FIG. 4, as illustrated in FIG. 4, the control circuitry further includes a power supply voltage circuit 160. The power supply voltage circuit 160 is coupled to the operating and display circuit 150, the signal processing circuit 120, the power drive circuit 130, and the detection and feedback circuit 110, and is configured to convert a voltage of an external power supply into a working voltage of each circuit of the pumping device.

The operating and display circuit 150, the signal processing circuit 120, the power drive circuit 130, and the detection and feedback circuit 110 operate at different working voltages. For example, some circuits operate at a voltage of 5 V, and some circuits operate at a voltage of 12 V. To enable each circuit module of the control circuitry to operate normally, the power supply voltage circuit 160 is required to convert the voltage of external power supply to the working voltages suitable for the subsequent stage circuits. Exemplarily, an external direct current (DC) voltage of 24 V is processed by a three-terminal regulator chip modeled LM7812 in the power supply voltage circuit 160 to be converted into a DC output voltage of 12 V; or the external DC voltage of 24 V is processed by a three-terminal regulator chip modeled LM7805 in the power supply voltage circuit 160 to be converted into a DC output voltage of 5 V.

Based on the preceding embodiment, the working principle of the control circuitry applied to the pumping device provided by this embodiment may be as follows. After the pumping device is powered on and initialized, the voltage detection circuit determines whether the voltage in the control circuitry is an undervoltage or overvoltage. In an undervoltage or overvoltage state, the pumping device would be stopped from being started. Otherwise at a normal voltage, the pumping device would continue to be started. The user sends an operating instruction to the signal processing circuit 120 by the function button of the operating and display circuit 150. After receiving the operating instruction, the signal processing circuit 120 sends the drive signal to the power drive circuit 130 to drive the U-phase, V-phase, and W-phase windings in the motor 140 to operate and the motor 140 is started and rotates. Meanwhile, the detection and feedback circuit 110 detects working information such as the working current and the rotational speed of the motor 140, and feeds back the working information to the signal processing circuit 120 to adjust in real time the drive signal of the motor 140 and change the working state of the motor 140. The operating and display circuit 150 may also observe in real time the working state of the motor 140 through the digital tube, the LED lamp, the liquid crystal display screen, or the like.

The detection and feedback circuit 110 determines the working state of the pumping device by detecting the magnitude of the working current of the motor 140 so that the signal processing circuit 120 adjusts the magnitude of the drive signal to enable the motor 40 to change the rotational speed and adapt to the working state. For example, if the control circuitry detects that the current rotational speed of motor 140 is 10000 rpm and the current working current is 1 A, it indicates that the motor 140 is in the air pumping state which is a light-load state. After the motor 140 operates for a period of time such as 5 to 10 seconds, the control circuitry detects that the current working current becomes 2 A, which indicates that the motor 140 may be in the water pumping state. At this time, the control circuitry decreases the rotational speed to 3000 rpm by decreasing the width of the PWM signal so that the working current decreases from 2 A to 1 A to adapt to the water pumping state. After the motor 140 operates at the low rotational speed suitable for the water pumping state for a period of time such as 1s, the control circuitry detects that the current working current becomes 2 A, which indicates that the motor 140 may be in an overload or locked state, the motor needs to be stopped for troubleshooting.

For another example, if the working current increases to a magnitude greater than a preset threshold within 5 to 10 seconds during which the motor 140 operates at the high rotational speed suitable for the air pumping state, it indicates that the air has been pumped, and the water is drawn in contact with the impeller to increase the load so that the current is increased and the motor 140 switches to the water pumping state. At this time, the signal processing circuit immediately adjusts the width of the PWM signal according to the change of the working current so that the motor operates at the low rotational speed suitable for the water pumping state. In this water pumping state, if light-load conditions don't occur such as water-free idle running, current overload, blocked or stalled motor or the like, the motor continuously operates at the low rotational speed suitable for the water pumping state for water pumping.

### Embodiment 2

FIG. 5 is a flowchart illustrating a control method applied to a pumping device according to Embodiment 2 of the present invention. As illustrated in FIG. 5, the control method includes the following operations.

In S210, current working state information of the pumping device is obtained.

The working state information includes a current rotational speed, a current working current, a current working power of a motor in the pumping device, a pressure detected within the pumping device, and the like. The current rotational speed of the motor may be calculated by detecting a time interval of a U-phase, V-phase, or W-phase feedback signal. A current detection circuit is configured to detect a magnitude of an instant working current of the motor. The current working power may be obtained according to the magnitude of the current working current and voltage. The current pressure may be obtained through a pressure gauge disposed in the pumping device. In the water pumping state, due to water pressure and resistance, an impeller of the motor in the pumping device is subjected to a relatively large resistance, the pressure gauge in the pumping device would sense a relatively large pressure, the current rotational speed of the motor is low, the working current is relatively large, the working power is relatively large, and the pressure value is relatively large, so that the motor is in an overload state. In the air pumping state, due to a relatively small air density and small air resistance, the impeller of the motor in the pumping device is subjected to a relatively small resistance, the pressure gauge in the pumping device would sense a relatively small pressure, the current rotational speed of the motor is relatively high, the working current is relatively small, the working power is relatively small, and the pressure value is relatively small so that the motor is in a light-load state.

In S220, a drive signal to be sent to the pumping device is adjusted in real time according to the working state information of the pumping device to control a working state of the pumping device to adapt to a current water or air pumping state.

In the water pumping state, the motor in the pumping device is configured to operate at a first rotational speed, and in the air pumping state, the motor is configured to operate at a second rotational speed, where the first rotational speed is lower than the second rotational speed.

Exemplarily, the first rotational speed may be 1000 to 4000 rpm, and the second rotational speed may be 8000 to 20000 rpm.

When detecting that the motor in the pumping device continues operating within the second rotational speed, it indicates that the pumping device is maintained in the air pumping state. When detecting that the rotational speed of the motor decreases from the second rotational speed to the first rotational speed, it indicates that the pumping device may switch from the air pumping state to the water pumping state. A width of a PWM signal determines a magnitude of the rotational speed of the motor, and the width of the PWM signal can be adjusted to adjust the rotational speed of the motor. The larger the width of the PWM signal, the higher the rotational speed of the motor; and the smaller the width of the PWM signal, the lower the rotational speed of the motor. In this case, the rotational speed of the motor may be decreased by decreasing the width of the PWM signal to adapt to the water pumping state.

When detecting that the motor in the pumping device continues operating within the first rotational speed, it indicates that the pumping device is maintained in the water pumping state. When detecting that the rotational speed of the motor increases from the first rotational speed to the second rotational speed, it indicates that the pumping device may switch from the water pumping state to the air pumping state. At this time, the rotational speed of the motor may be increased by increasing the width of the PWM signal to adapt to the air pumping state and improve an air pumping capability and working efficiency.

With the control method applied to the pumping device provided by the embodiment of the present invention, the current working state information of the pumping device is acquired, and the drive signal sent to the pumping device is adjusted in real time according to the working state information of the pumping device to control the working state of the pumping device to adapt to the current water or air pumping state so that the pumping device can pump both air and water and automatically switch back and forth between the water pumping state and the air pumping state through simple and quick operations, thereby effectively solving the problem of complicated air discharge, water discharge and water change operations of aquarium equipment.

Based on the preceding embodiment, the working state information includes the working current. When the instant working current of the motor operating at the second rotational speed is greater than a first preset threshold, the motor is controlled to decrease the rotational speed. When the instant working current of the motor operating at the first rotational speed is less than a second preset threshold, the motor is controlled to increase the rotational speed.

The first preset threshold may be equal to or greater than the second preset threshold. Due to a relatively large water resistance in the water pumping state, for the pumping device needs a relatively larger working current to drive the motor to pump water to achieve the water pumping purpose. When the instant working current of the motor operating at the second rotational speed is greater than the first preset threshold, the motor may switch from the air pumping state to the water pumping state, the motor would be controlled to decrease the rotational speed to reduce water resistance on the impeller in the water pumping state so that the pump device can adapt to the water pumping state. Due to the relatively small air density, the air resistance in the air pumping state is small, so that the pumping device may drive the motor to pump air with a smaller working current. When the instant working current of the motor operating at the first rotational speed is less than the second preset threshold, the motor may be in the air pumping state, the motor may be controlled to increase the rotational speed to improve the air pumping capability and the working efficiency so as to enable the pumping device to adapt to the air pumping state.

Based on the preceding embodiment, the working state information includes the pressure value detected by the pressure gauge in the pumping device. When the pressure value changes from a relatively small value to a relatively large value, it indicates that the pumping device switches from the air pumping state to the water pumping state; the width of the PWM signal may be decreased to decrease the rotational speed or the working current may be increased to increase the drive signal of the motor to adapt to the current water pumping state of the pumping device. When the pressure value changes from a relatively large value to a relatively small value, it indicates that the pumping device switches from the water pumping state to the air pumping state; the width of the PWM signal may be increased to increase the rotational speed or the working current may be decreased to decrease the drive signal of the motor to adapt to the current air pumping state of the pumping device, thereby improving the working efficiency, reducing power consumption, and preventing overload.

Based on the preceding embodiment, the working state information detected by the detection and feedback circuit includes a water presence/absence signal in the pumping device detected by a water detection circuit. Taking the water presence/absence signal as an example, when the water presence signal in the pumping device is detected, it indicates that the pumping device switches from the air pumping state to the water pumping state; the rotational speed may be decreased or the working current may be increased to increase the drive signal of the motor to adapt to the current water pumping state of the pumping device. When the water absence signal in the pumping device is detected, it indicates that the pumping device switches from the water pumping state to the air pumping state; the rotational speed may be increased or the working current may be decreased to decrease the drive signal of the motor to adapt to the current air pumping state of the pumping device, thereby improving the working efficiency, reducing the power consumption, and preventing the overloads.

### Embodiment 3

In the description of Embodiment 3, unless otherwise expressly specified and limited, the term "connected to each other", "connected" or "fixed" should be construed in a broad sense, for example, may be construed to be a permanently connected, detachably connected, or integrated; mechanically connected or electrically connected; directly connected to each other or indirectly connected to each other via an intermediary; or internally connected or interacted between two components. For those skilled in the art, the preceding term can be construed depending on specific contexts.

In the description of Embodiment 3, unless otherwise expressly specified and limited, when a first feature is described as "on" or "under" a second feature, the first feature and the second feature may be in direct contact, or be in contact via another feature between the two features. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

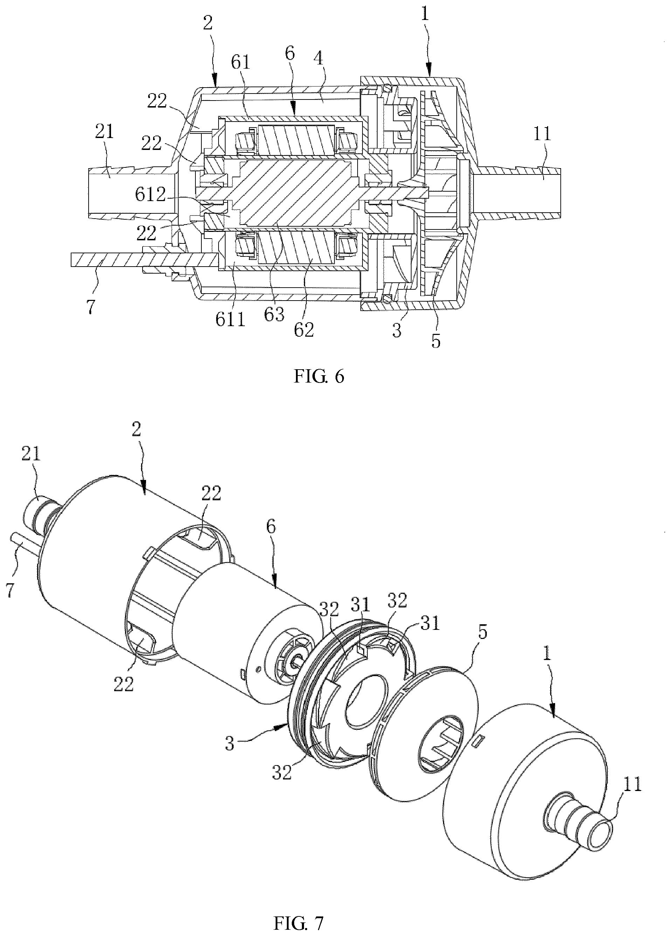

FIG. 6 is a sectional view illustrating a pumping device according to an Embodiment 3 of the present invention. FIG. 7 is an exploded diagram of the pumping device according to Embodiment 3 of the present invention. In the drawings:
1: First pump housing; 11: Water inlet; 2: Second pump housing; 21: Water outlet; 22: Web; 3: Partition plate; 31: Water outlet hole; 32: Flow guiding channel; 4: Water outlet passage; 5: Impeller; 6: Motor; 61: Housing; 611: Stator mounting cavity; 612: Rotor mounting position; 62: Stator; 63: Rotor; 7: Power cord.

As illustrated in FIG. 6 and FIG. 7, in this embodiment, a pumping device in the present invention includes a pump housing. The pump housing includes a first pump housing 1 and a second pump housing 2 connected to each other. The first pump housing 1 is provided with a water inlet 11. The second pump housing 2 is provided with a water outlet 21. A partition plate 3 is disposed between the first pump housing 1 and the second pump housing 2. A pump room is formed between the first pump housing 1 and the partition plate 3 and is configured for accommodating an impeller 5. The water inlet 11 communicates with the pump room. A receiving cavity is formed between the second pump housing 2 and the partition plate 3 and is configured for accommodating a motor 6. The motor 6 is spaced apart from the second pump housing 2. A rotating shaft of the motor 6 passes through the partition plate 3 to be connected to the impeller 5. A water outlet passage 4 in communication with the water outlet 21 is formed between a housing 61 of the motor 6 and the second pump housing 2. The partition plate 3 is provided with multiple water outlet holes 31 corresponding to the water outlet passage 4.

Furthermore, the impeller 5 is a semi-closed impeller or a closed impeller.

The partition plate 3 and the water outlet passage 4 through which a fluid flows are disposed within the pump housing. When the pumping device is in an air pumping state, a rotational speed, a power or a conducting current of the motor 6 is adjusted by a control device to enable the impeller 5 to rotate at a high speed so that a strong negative pressure is formed in the pump room, and the air outside is quickly pumped into a tube to achieve air pumping. When the pumping device is in a water pumping state, the control device controls a working state of the motor 6 to avoid the motor 6 being damaged; meanwhile, the water outlet passage 4 is disposed outside the housing 61 of the motor 6 so that the fluid flowing past the housing 61 of the motor 6 can effectively cool a temperature of the motor 6, reduce an amount of the generated heat, and prevent the motor 6 from being damaged.

In this embodiment, the water outlet holes 31 in the partition plate 3 are not limited as long as the fluid can flow through the partition plate 3; that is, the number of the outlet holes 31 may be one, two, three or more.

In this embodiment, the partition plate 3 is disposed within the first pump housing 1 or the second pump housing 2, and the partition plate 3 is sealingly connected to the first pump housing 1 or the second pump housing 2. The multiple water outlet holes 31 are arranged along a radial direction of the partition plate 3. Flow guiding passages 32 are disposed on a side of the water outlet holes 31 opposite to a rotational direction of the impeller 5.

Furthermore, the flow guiding passage 32 is disposed in a wedge shape. A large end of the flow guiding channel 32 is connected to the water outlet hole 31, and a smaller end of the flow guiding channel 32 is located on a side away from the rotational direction of the impeller 5.

By disposing the flow guiding channels 32 on the partition plate 3, the fluid may be effectively guided from the pump room into the water outlet passage 4 within the second pump housing 2, enhancing fluidity of the fluid and improving working efficiency of the pumping device. A sealing member may be disposed at a joint between the partition plate 3 and the first pump housing 1 or the second pump housing 2 to seal the joint to enhance a guiding effect of the partition plate 3 on the fluid.

In this embodiment, the motor 6 includes the housing 61, a stator 62, and a rotor 63. A stator mounting cavity 611 for mounting the stator 62 is disposed within the housing 61. A rotor mounting position 612 for mounting the rotor 63 is disposed corresponding to the stator mounting cavity 611 inside the housing 61. The stator mounting cavity 611 is a sealed structure.

The stator mounting cavity 611 with the sealing structure is disposed within the housing 61 of the motor 6, and the stator 62 is mounted within the stator mounting cavity 611, or the stator 62 is potted and fixed within the stator mounting cavity 611 with insulating materials so that the stator 62 may be effectively sealed and be isolated from the fluid, preventing the fluid flowing within the pumping device from entering into the stator 62 of the motor 6 to cause a short circuit or the like which may damage the motor 6.

In a specific embodiment, the motor 6 is fixed to the partition plate 3, and the second pump housing 2 is provided with multiple webs 22 for supporting the motor 6 and corresponding to the motor 6. The webs 22 are arranged along a longitudinal direction of the second pump housing 2. One end of the web 22 is secured to an inner surface of the second pump housing 2, and the other end of the web 22 optionally abuts against the motor 6.

The motor 6 is fixed to the partition plate 3, and the webs 22 are arranged within the second pump housing 2 to assisting in securing the motor 6 so that the motor 6 may be prevented from being displaced and detached, which may solve the problem to secure the motor 6 and may also preventing the motor 6 from affecting the flow of the fluid within the pumping device, thereby ensuring operational stability of the motor 6 and effectively reducing flow resistance on the fluid within the pump housing caused by securing the motor 6.

Furthermore, an inner diameter of the first pump housing 1 at an end being connected to the second pump housing 2 matches an outer diameter of the second pump housing 2. The first pump housing 1 is partially sleeved on the second pump housing 2, and the first pump housing 1 is sealingly connected to the second pump housing 2.

In this embodiment, further included are a detection device configured for detecting the rotational speed, the power or a current magnitude of the motor 6, and a control device configured for controlling the working state of the motor 6.

By providing the pumping device with the control device, the dual function of water pumping and air pumping can be achieved, making it convenient to use and operate the pumping device, reducing troubles, and decreasing the difficulty in operation.

Specifically, the control device includes a detection portion and a portion for controlling the motor 6. The detection portion monitors a load of the impeller 5 and feeds the load back to the portion for controlling the motor 6. When the detection portion detects that the motor 6 is in a low load state (i.e., the air pumping state), the portion for controlling the motor 6 controls the motor 6 to operate at a high rotational speed for the air pumping state to create a strong suction force within the pump room for air pumping purposes. When the detection portion detects that the motor 6 is in a high load state (i.e., the water pumping state), the portion for controlling the motor 6 controls the motor 6 to operate at a low rotational speed for the water pumping state to reduce a load of the motor 6 and preventing the motor 6 from malfunction or damages due to current or power overloads.

The preceding control of the rotational speed of the motor may be implemented in multiple forms, which are described below.
1. A universal motor may be used. The universal motor has a high rotational speed in a free-load or light-load state, and has a low rotational speed in a heavy-load state.
2. A DC motor plus a current control device are used. The DC motor has a high rotational speed in the free-load or light-load state. In the heavy-load state, the current will increase; however, because of the current control device, the current will not increase when the current reaches a certain set value so that the rotational speed of the DC motor decreases and the DC motor operates at a relatively low rotational speed.
3. A drive control circuitry with a current or power control feature is used. The drive control circuitry detects the current or power of the motor and then limits the current or power of the motor. Alternatively, the drive control circuitry controls the current or power of the motor by adjusting the rotational speed of the motor.
4. The rotational speed, current or power of the motor is controlled by detecting the presence of water. The rotational speed, current or power of the motor may also be controlled by detecting a pressure within the tube or in other forms.

In addition, this embodiment further provides aquarium equipment which is provided with the pumping device described above.

A power cord 7 of the motor 6 in this embodiment penetrates through from an end of the second pump housing 2 facing away from the first pump housing 1.

In the description of the present invention, it is to be understood that the orientational or positional relationships indicated by terms "above" and the like are the orientation or position relationships illustrated in the FIG. 6 and FIG. 7, are merely intended for ease of description and simplifying operations, and these relationships do not indicate or imply that the mentioned device or component has a specific orientation and is constructed and operated in a specific orientation, and thus it is not to be construed as a limitation to the present invention.

In the description of the specification, the description of reference terms "an embodiment" and the like means that specific features, structures, materials or characteristics described in connection with the embodiment are included in at least one embodiment or example of the present invention. In the specification, the schematic representation of the preceding terms does not necessarily refer to the same embodiment.

It to be noted that the foregoing description merely portrays some exemplary embodiments according to the present invention as well as illustrates the technical principles used herein. It will be understood by those skilled in the art that the present invention will not be limited to the specific embodiments described herein. Those skilled in the art can make various apparent modifications, adaptations and substitutions without departing from the scope of the present invention. Therefore, while the present invention has been described in detail via the above-mentioned embodiments, the present invention will not be limited to the above-mentioned embodiments and may include various other equivalent embodiments without departing from the concept of the present invention. The scope of the present invention is determined only by the scope of the appended claims.

## Claims

1. A control circuitry applied to a pumping device configured for pumping water and air, the control circuitry comprising a detection and feedback circuit, a signal processing circuit, and a power drive circuit, wherein
the detection and feedback circuit is coupled to the signal processing circuit and configured to obtain working state information of the pumping device and feed the working state information back to the signal processing circuit;
the signal processing circuit is coupled to the power drive circuit and configured to adjust in real time a drive signal to be sent to the power drive circuit according to the working state information;
the power drive circuit is coupled to the detection and feedback circuit and configured to drive a motor in the pumping device to operate according to the drive signal; and
the power drive circuit is configured to drive the motor to operate at a first rotational speed in response to the detection and feedback circuit obtaining the working state information indicative of the pumping device being under a water pumping state, and drive the motor to operate at a second rotational speed in response to the detection and feedback circuit obtaining the working state information indicative of the pumping device being under an air pumping state, the first rotational speed being less than the second rotational speed.

2. The control circuitry of claim 1, further comprising:
an operating and display circuit, coupled to the signal processing circuit, and configured to obtain an operating instruction, output the operating instruction to the signal processing circuit, and display a current working state of the pumping device.

3. The control circuitry of claim 1, wherein the power drive circuit comprises a U-phase drive circuit, a V-phase drive circuit, and a W-phase drive circuit; the motor of the pumping device comprises a U-phase winding, a V-phase winding, and a W-phase winding; the U-phase drive circuit is configured to drive the U-phase winding to operate, the V-phase drive circuit is configured to drive the V-phase winding to operate, and the W-phase drive circuit is configured to drive the W-phase winding to operate; and the signal processing circuit comprises a single-chip microcomputer U3modeled STC15W408AS;
wherein the U-phase drive circuit comprises a half-bridge driver U4 modeled IR2103S, a diode D4, an NMOS transistor Q1, an NMOS transistor Q2, a resistor R16, a resistor R17, a resistor R22, a resistor R23, and a capacitor C16; wherein a pin 2 of the half-bridge driver U4 is coupled to a first terminal of the resistor R16, and a second terminal of the resistor R16 is coupled to a pin 20 of the single-chip microcomputer U3; a pin 3 of the half-bridge driver U4 is coupled to a first terminal of the resistor R17, and a second terminal of the resistor R17 is coupled to a pin 19 of the single-chip microcomputer U3; a pin 4 of the half-bridge driver U4 is coupled to a power ground; a pin 1 of the half-bridge driver U4 is coupled to a power supply Vdd; a pin 5 of the half-bridge driver U4 is coupled to a first terminal of the resistor R23, and a second terminal of the resistor R23 is coupled to a Gate of the NMOS transistor Q2; a pin 7 of the half-bridge driver U4 is coupled to a first terminal of the resistor R22 and to a first terminal of the capacitor C16; a pin 8 of the half-bridge driver U4 is coupled to a second terminal of the capacitor C16 and to a first terminal of the diode D4; a second terminal of the diode D4 is coupled to the power supply Vdd; the resistor R22 is coupled to a Gate of the NMOS transistor Q1; a pin 6 of the half-bridge driver U4 is coupled to a Source of the NMOS transistor Q1, to a Drain of the NMOS transistor Q2, and to a U-phase terminal of the motor M1; a Drain of the NMOS transistor Q1 is coupled to an input power supply Vin; and a Source of the NMOS transistor Q2 is coupled to a virtual ground;
the V-phase drive circuit comprises a half-bridge driver U5 modeled IR2103S, a diode D5, an NMOS transistor Q3, an NMOS transistor Q4, a resistor R18, a resistor R19, a resistor R24, a resistor R25, and a capacitor C17; wherein a pin 2 of the half-bridge driver U5 is coupled to a first terminal of the resistor R18, and a second terminal of the resistor R18 is coupled to a pin 18 of the single-chip microcomputer U3; a pin 3 of the half-bridge driver U5 is coupled to a first terminal of the resistor R19, and a second terminal of the resistor R19 is coupled to a pin 17 of the single-chip microcomputer U3; a pin 4 of the half-bridge driver U5 is coupled to the power ground; a pin 1 of the half-bridge driver U5 is coupled to the power supply Vdd; a pin 5 of the half-bridge driver U5 is coupled to a first terminal of the resistor R25, and a second terminal of the resistor R25 is coupled to a Gate of the NMOS transistor Q4; a pin 7 of the half-bridge driver U5 is coupled to a first terminal of the resistor R24 and to a first terminal of the capacitor C17; a pin 8 of the half-bridge driver U5 is coupled to a second terminal of the capacitor C17 and to a first terminal of the diode D5; a second terminal of the diode D5 is coupled to the power supply Vdd; the resistor R24 is coupled to a Gate of the NMOS transistor Q3; a pin 6 of the half-bridge driver U5 is coupled to a Source of the NMOS transistor Q3, to a Drain of the NMOS transistor Q4, and to a V-phase terminal of the motor M1; a Drain of the NMOS transistor Q3 is coupled to the input power supply Vin; and a Source of the NMOS transistor Q4 is coupled to the virtual ground; and
the W-phase drive circuit comprises a half-bridge driver U6 modeled IR2103S, a diode D6, an NMOS transistor Q5, an NMOS transistor Q6, a resistor R20, a resistor R21, a resistor R26, a resistor R27, and a capacitor C18; wherein a pin 2 of the half-bridge driver U6 is coupled to a first terminal of the resistor R20, and a second terminal of the resistor R20 is coupled to a pin 16 of the single-chip microcomputer U3; a pin 3 of the half-bridge driver U6 is coupled to a first terminal of the resistor R21, and a second terminal of the resistor R21 is coupled to a pin 15 of the single-chip microcomputer U3; a pin 4 of the half-bridge driver U6 is coupled to the power ground; a pin 1 of the half-bridge driver U6 is coupled to the power supply Vdd; a pin 5 of the half-bridge driver U6 is coupled to a first terminal of the resistor R27, and a second terminal of the resistor R27 is coupled to a Gate of the NMOS transistor Q6; a pin 7 of the half-bridge driver U6 is coupled to a first terminal of the resistor R26 and to a first terminal of the capacitor C18; a pin 8 of the half-bridge driver U6 is coupled to a second terminal of the capacitor C18 and to a first terminal of the diode D6; a second terminal of the diode D6 is coupled to the power supply Vdd; the resistor R26 is coupled to a Gate of the NMOS transistor Q5; a pin 6 of the half-bridge driver U6 is coupled to a Source of the NMOS transistor Q5, to a Drain of the NMOS transistor Q6 and to a W-phase terminal of the motor M1; a Drain of the NMOS transistor Q5 is coupled to the input power supply Vin, and a Source of the NMOS transistor Q6 is coupled to the virtual ground.

4. The control circuitry of claim 3, wherein the detection and feedback circuit comprises a feedback signal detection circuit, which comprises a U-phase feedback signal detection circuit, a V-phase feedback signal detection circuit, and a W-phase feedback signal detection circuit;
wherein the feedback signal detection circuit comprises a resistor R7, a resistor R8, a resistor R9, a resistor R10, a resistor R11, a resistor R12, a resistor R13, a resistor R14, a resistor R15, a capacitor C13, a capacitor C14, and a capacitor C15; wherein a first terminal of the resistor R8, a first terminal of the capacitor C13, a first terminal of the resistor R11, a first terminal of the capacitor C14, a first terminal of the resistor R14, and a first terminal of the capacitor C15 are coupled to the power ground; a second terminal of the resistor R8 is coupled to a pin 4 of the single-chip microcomputer U3; a first terminal of the resistor R7, a second terminal of the capacitor C13, a first terminal of the resistor R9, and a second terminal of the resistor R7 are coupled to the U-phase terminal of a motor M1; a second terminal of the resistor R11 is coupled to a pin 6 of the single-chip microcomputer U3; a first terminal of the resistor R10, a second terminal of the capacitor C14, a first terminal of the resistor R12, and a second terminal of the resistor R10 are coupled to the V-phase terminal of the motor M1; a second terminal of the resistor R14 is coupled to a pin 5 of the single-chip microcomputer U3, to a first terminal of the resistor R13, to a second terminal of the capacitor C15, and to a first terminal of the resistor R15; a second terminal of the resistor R13 is coupled to the W-phase terminal of the motor M1; and a second terminal of the resistor R9, a second terminal of the resistor R12, and a second terminal of the resistor R15 are coupled to a pin 7 of the single-chip microcomputer U3.

5. The control circuitry of claim 1, wherein the detection and feedback circuit further comprises a voltage detection circuit configured to determine whether a voltage in the control circuitry is an undervoltage or an overvoltage.

6. The control circuitry of claim 1, wherein the detection and feedback circuit further comprises a current detection circuit configured to detect a magnitude of an instant working current of the motor to determine a working state of the motor.

7. The control circuitry of claim 1, wherein the detection and feedback circuit is further configured to detect a U-phase, V-phase, or W-phase feedback signal and a time interval thereof when the motor is working, to determine a working state of the motor.

8. The control circuitry of claim 7, wherein the signal processing circuit is further configured to adjust a width of a pulse width modulation signal that drives the motor to operate according to the time interval of the U-phase, V-phase, or W-phase feedback signal to adjust a rotational speed of the motor.

9. A control method, applied to a pumping device configured for pumping water and air, the control method comprising:
obtaining current working state information of the pumping device; and
adjusting in real time a drive signal sent to the pumping device according to the working state information of the pumping device to control a working state of the pumping device to adapt to a current water or air pumping state, wherein a motor in the pumping device is configured to operate at a first rotational speed in the water pumping state, and to operate at a second rotational speed in the air pumping state, the first rotational speed being less than the second rotational speed.

10. The control method of claim 9, wherein the working state information comprises a working current; and
wherein adjusting in real time the drive signal sent to the pumping device according to the working state information of the pumping device comprises:
in response to an instant working current of the motor operating at the second rotational speed being greater than a first preset threshold, controlling the motor to decrease the rotational speed, and in response to the instant working current of the motor operating at the first rotational speed being less than a second preset threshold, controlling the motor to increase the rotational speed.

11. A pumping device, comprising: a pump housing, which comprises a first pump housing and a second pump housing connected to each other; the first pump housing is provided with a water inlet; the second pump housing is provided with a water outlet; a partition plate is disposed between the first pump housing and the second pump housing; a pump room is formed between the first pump housing and the partition plate and is configured for accommodating an impeller; the water inlet communicates with the pump room; a receiving cavity is formed between the second pump housing and the partition plate and is configured for accommodating a motor; the motor is spaced apart from the second pump housing; a rotating shaft of the passes through the partition plate to be connected to the impeller; an outlet channel in communication with the water outlet passage is formed between a housing of the motor and the second pump housing; and the partition plate is provided with a plurality of water outlet holes corresponding to the water outlet passage;
wherein the pumping device further comprises: a detection device configured for detecting a rotational speed, a power or a current magnitude of the motor; and a control device configured for controlling a working state of the motor.

12. The pumping device of claim 11, wherein the plurality of water outlet holes are arranged along a radius of the partition plate, and a flow guiding passage is defined on a side of the plurality of water outlet holes opposite to a rotational direction of the impeller.

13. The pumping device of claim 12, wherein the flow guiding passage is of a wedge shape, a larger end of the flow guiding passage is connected to the plurality of water outlet holes, and a smaller end of the flow guiding passage is located on a side away from the rotational direction of the impeller.

14. The pumping device of claim 11, wherein the second pump housing is provided with a plurality of webs for supporting the motor corresponding to the motor; wherein one end of each of the plurality of webs is fixedly connected to an inner surface of the second pump housing, and another end thereof abuts optionally against the motor.

15. An aquarium equipment, in which is provided the pumping device of any one of claims 11 to 14.
